Europäisches Patentamt

European Patent Office

Office européen des brevets

(11) Publication number: **0 063 848**
**B1**

(12)
# EUROPEAN PATENT SPECIFICATION

(45) Date of publication of patent specification: **22.01.86**

(51) Int. Cl.⁴: **B 65 G 21/20**

(21) Application number: **82200480.0**

(22) Date of filing: **21.04.82**

(54) **Device for attaching a side guide to a conveyor device.**

(30) Priority: **24.04.81 DE 3116334**

(43) Date of publication of application:
**03.11.82 Bulletin 82/44**

(45) Publication of the grant of the patent:
**22.01.86 Bulletin 86/04**

(84) Designated Contracting States:
**AT BE CH DE FR GB IT LI LU NL SE**

(56) References cited:
**EP-A-0 017 637**
**EP-A-0 048 524**
**FR-A-1 287 983**
**FR-A-2 392 902**
**US-A-2 942 899**
**US-A-4 066 373**

(73) Proprietor: **M.C.C. Nederland B.V.**
**Wattstraat 3**
**NL-2691 GZ 's-Gravenzande (NL)**

(72) Inventor: **Sijbrandij, George**
**Monsterseweg 134**
**Poeldijk (NL)**

(74) Representative: **de Wit, Gerard Frederik, Ir. et al**
**Octrooi- en Merkenbureau De Wit B.V.**
**Breitnerlaan 146**
**NL-2596 HG Den Haag (NL)**

Courier Press, Leamington Spa, England.

## Description

The invention relates to a device for attaching a side guide to a conveyor device, provided with a metal profile bearing the side guide and with a clamping device for mounting the metal profile to a member connected to a strut.

Such a device is known from the European Patent Application EP—A—0 017 637.

The invention aims to improve such a device such that a releasable positive connection is provided, which nevertheless provides a limited flexibility of the orientation of the metal profile, for instance in curves of the side guide. The curves for instance are necessary for shifting the objects from the moving surface to the side or onto a second conveyor surface moving along the said moving surface.

According to a previous proposal of the applicant, vide EP—A—0 048 524, the metal profile is connected to a mounting pin, which mounting pin is shiftably and fixably applied in a strut in such a way that a side guide can be mounted in a predetermined form.

The connection between the metal profile and the mounting pin can be obtained by means of a bolt passing through a hole in the metal profile and being for instance threaded in a threaded hole in the mounting pin.

Therewith a difficulty is that in the metal profile holes have to be applied in each location where a connection with a mounting pin is required. In case afterwards the application of a further support of the side guide proves to be necessary, as for instance in a curve, for that purpose the plastic profile has to be removed from the metal profile, or one has to use two separate plastic profiles mounted over each other, which, however, leads to a less attractive sight and more locations where dirt may enter.

Further each mounting pin has to be provided with a threaded hole and for threading the screw into the threaded hole an at least partly non cylindrical shape of the mounting pin is desired.

The invention aims to eliminate the indicated disadvantages of both cited European Patent Applications and to procure a device for attaching a side guide to a strut, which provides a reliable but releasable and adaptable mounting and which can be used easily without the need of applying holes in the metal profile.

Accordingly the invention is characterized in that said member is a mounting pin extending transversely to said metal profile, in that said metal profile has a longitudinal rib which at its end is provided with an enlargement and in that the surfaces of the metal profile joining the rib meet the adjoining surfaces of the rib at an obtuse angle, said clamping device having two portions with a cross-sectional shape that is matched to that of the metal profile and the rib to engage said adjoining surfaces of the metal profile and to encompass said enlargement, bolting means cooperating with said clamping device to press said portions on the one hand against opposite sides of said rib and its enlargement and on the other hand against opposite sides of said pin.

Herewith the flexibility of the conveyor device for different types of objects is very essentially improved or another use of the device is considerably facilitated, because the location of the different struts has not to be determined beforehand, so that special personnel is not further necessary for a switch.

Preferably the bolting means contains two bolts, one at each side of a recess to encompass the end of said pin.

A very easy to manipulate and flexible embodiment of the invention is obtained by providing that said clamping portions are made of a substantially elastic material and connected to each other by means of a flexible part to form a unitary member.

The inventive innovation in the following is further described on hand of the exemplary embodiment shown in the drawing.

Herein show:

Figure 1 a vertical cross-section through an exemplary embodiment of the attaching device together with the strut and the side guide,

Figure 2 a front view of the device shown in figure 1 and

Figure 3 a plan view, partly in section, of certain parts of the device shown in figure 1.

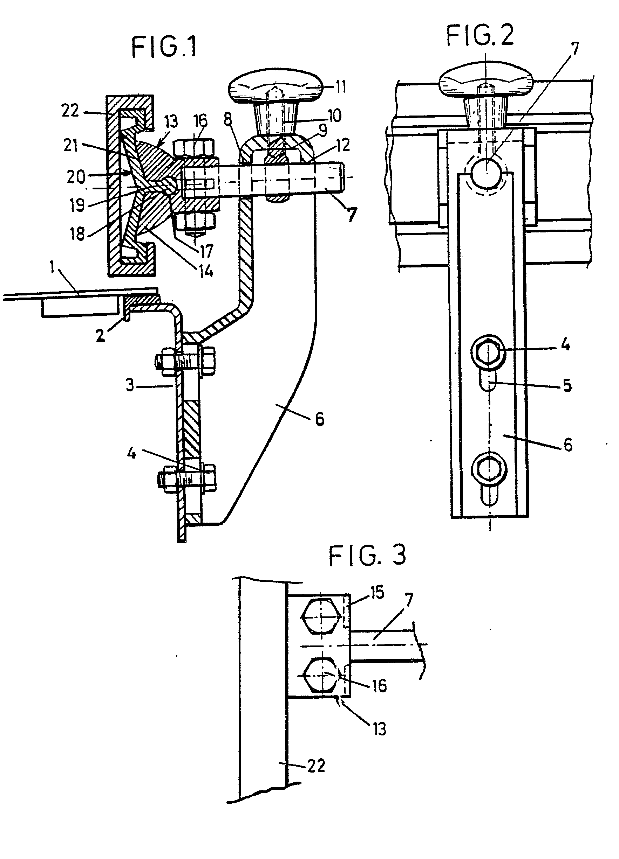

In figure 1 a conveyor web moving perpendicular to the plane of drawing has been indicated with reference 1, on the upper side of which not specially shown objects, for instance bottles, are present. An edge 2 of for instance plastic material supporting the conveyor web 1 is mounted to a longitudinal support 3. By means of threaded bolts 4 and oblong holes 5 a strut 6 is attached to the longitudinal support 3. A mounting pin 7, which preferably has a circular cross-section, protrudes through a hole 8 in the strut 6 and an eyelet 9 of a threaded bolt 10 supports a threaded turn knob 11 that serves the purpose of counter thread and pulls the mounting pin 7 against the edge of the hole 8 and the circular recess 12 of the strut 6 and therewith clamps it.

At its left end, the mounting pin 7 is received in a clamping device 13. This clamping device is formed by two parts 14 connected to each other by means of transverse members 15. Because the device 13 is made from a plastic material that yields a little, the parts 14 can be pressed towards each other by means of threaded bolts 16, wherewith the members 15 can be deformed somewhat.

The clamping parts 14 are each provided with a recess 17, in which recesses 17 an enlargement of the rib 19 of the metal profile 20 can be received.

The metal profile 20 has, starting from the rib 19, walls 21 that tilt a little and cooperate in such a way with the clamping parts 14 that during the clamping of the parts 14 the walls 21 of the metal profile 20 by means of the enlargement 18 are pressed against the clamping parts 14 and a perfect support of the metal profile 20 is reached.

The metal profile 20 is further shaped in such a way that it can support the side guide proper, for instance the profile 22 of plastic material.

## Claims

1. Device for attaching a side guide (22) to a conveyor device, provided with a metal profile (20) bearing the side guide and with a clamping device for mounting the metal profile to a member (7) connected to a strut (6), characterized in that said member (7) is a mounting pin extending transversely to said metal profile, in that said metal profile has a longitudinal rib (19) which at its end is provided with an enlargement (18) and in that the surfaces of the metal profile joining the rib meet the adjoining surfaces of the rib at an obtuse angle, said clamping device having two portions (13, 14) with a cross-sectional shape that is matched to that of the metal profile and the rib to engage said adjoining surfaces of the metal profile and to encompass said enlargement, bolting means (16) cooperating with said clamping device to press said portions on the one hand against opposite sides of said rib and its enlargement and on the other hand against opposite sides of said pin.

2. Device according to claim 1, characterized in that said bolting means contains two bolts, one at each side of a recess to encompass the end of said pin.

3. Device according to claim 1 or 2, characterized in that said clamping portions (13, 14) are made of a substantially elastic material and connected to each other by means of a flexible part to form a unitary member.

## Revendications

1. Dispositif pour fixer un guide latéral (22) à un dispositif convoyeur, comprenant un profilé métallique (20) supportant le guide latéral et un dispositif de fixation pour monter le profilé métallique sur une pièce (7) reliée à une jambe de force (6), caractérisé par le fait que la pièce (7) est un goujon de montage orienté transversalement par rapport au profilé métallique, par le fait que ledit profilé métallique comprend une nervure horizontale (19) qui est élargie à son extrémité (18) et par le fait que les surfaces des profilés métalliques assemblant la nervure aux surfaces voisines de cette nervure font un angle obtus, ledit dispositif de serrage comprenant deux portions (13, 14) ayant une section transversale de forme adaptée à celle du profilé métallique et à celle de la nervure, de façon à s'emboîter avec les surfaces d'assemblage du profilé métallique et à entourer ledit élargissement, des moyens de fixation par boulons coopérant avec ledit dispositif de serrage pour comprimer lesdites portions d'une part contre les faces opposées de ladite nervure et contre son élargissement et d'autre part contre des faces opposées dudit goujon.

2. Dispositif selon la revendication 1, caractérisé par le fait que les moyens de fixation par des boulons comprennent deux boulons, un de chaque côté d'un évidement pour entourer l'extrémité dudit goujon.

3. Dispositif selon l'une des revendications 1 ou 2, caractérisé par le fait que les portions de serrage (13, 14) sont fabriquées en un matériau sensiblement élastique et reliées entre elles au moyen d'une pièce souple pour former un ensemble unitaire.

## Patentansprüche

1. Vorrichtung zur Befestigung einer Seitenführung (22) an einer Fördereinrichtung, versehen mit einem Metallprofil (20), das die Seitenführung trägt und mit einer Klemmvorrichtung für die Montage des Metallprofils an einem Teil (7), der mit einer Stütze (6) verbunden ist, dadurch gekennzeichnet, dass der genannte Teil (7) ein Tragbolzen ist, der sich quer zu dem genannten Metallprofil ausbreitet, dass das Metallprofil einen Längensteg (19) hat, der an seinem Ende mit einem Wulst (18) versehen ist und dass die Oberflächen des Metallprofils die mit dem Steg verbunden sind den angrenzenden Oberflächen des Steges mit einem stumpfen Winkel begegnen, welche Klemmvorrichtung zwei Teile (13, 14) mit einer Querschnittsform, die der des Metallprofils und des Steges angepasst ist, hat um die angrenzenden Oberflächen des Metallprofils zu begegnen und den Wulst zu umfassen, wobei ein Schraubemittel (16) mit der genannten Klemmvorrichtung zusammenarbeitet um die genannten Teile einerseits gegen einander gegenüberstehende Seiten des genannten Steges und dessen Wulstes und anderseits gegen einander gegenüberliegende Seiten des Bolzens zu drücken.

2. Vorrichtung nach Anspruch 1, dadurch gekennzeichnet, dass das Schraubemittel zwei Schraubbolzen enthält, einer an jeder Seite einer Aussparung um das Ende des Bolzens zu umfassen.

3. Vorrichtung nach Anspruch 1 oder 2 dadurch gekennzeichnet, dass die genannten Klemmteile (13, 14) von einem wesentlich elastischem Material sind und mit einander verbunden sind durch einem flexibelen Teil um ein integrales Organ zu bilden.

FIG.1

FIG.2

FIG. 3